# EUROPEAN PATENT SPECIFICATION

(11) **EP 4 431 254 B1**
(45) Date of publication and mention of the grant of the patent: **02.12.2026**
(21) Application number: 24163852.7
(22) Date of filing: 15.03.2024
(51) Int. Cl.: B26F 1/24, B26D 1/00, B26F 1/44, B29B 11/16, C04B 35/80, C04B 35/565, C04B 35/634, D04H 18/02

(54) **SHEATHED METALLIC NEEDLES FOR PRODUCING Z-CHANNELS IN FIBROUS PREFORMS**
UMMANTELTE METALLISCHE NADELN ZUR HERSTELLUNG VON Z-KANÄLEN IN FASERVORFORMLINGEN
AIGUILLES MÉTALLIQUES GAINÉES POUR LA FABRICATION DE CANAUX EN Z DANS DES PRÉFORMES FIBREUSES

(30) Priority: 17.03.2023 US 202318123037
(43) Date of publication of application: 18.09.2024
(60) Divisional application: 26215036.0
(73) Proprietor: RTX Corporation, Farmington, CT 06032 (US)
(72) Inventor: LENZ, Brendan, East Hartford, 06118 (US); KOLE, Molly, East Hartford, 06118 (US)
(74) Representative: Dehns

(56) References cited:
- EP-A1- 4 375 038
- CN-A- 112 077 930
- DE-A1- 10 356 900
- DE-A1- 2 343 646
- GB-A- 2 606 342
- US-B2- 8 216 641
- US-B2- 8 448 310

## Description

### BACKGROUND

The present invention relates to the fabrication of ceramic matrix composites (CMCs) and, more particularly, to CMCs having improved properties for operating in gas turbine engines.

In the processing of CMCs, there is a need to infiltrate matrix within and around fibrous tows to replace pore volume with dense matrix material. In a woven system, large voids often exist between adjacent tows of a preform. Such voids can become large defects after infiltration of the composite that are detrimental to composite properties. The pore network through a woven system is often highly tortuous for infiltrating reactant vapors, which leads to uneven deposition through the thickness of the preform.

The formation of z-channels can create more direct pathways for reactant gases. However, the metallic needles commonly used to form z-channels can contaminate and/or deform the preform. For example, metallic particles from the needles can remain in the preform after needle removal. Such particles and the preform ceramic material(s) have dissimilar thermal and mechanical properties, thus their presence in the final CMC can be detrimental. Additionally, needle removal can create localized deformations (i.e., from "springback") on the preform surfaces leading to defects after chemical vapor infiltration (CVI). Improved means for perforating preforms are therefore desirable.

DE 23 43 646 A1 discloses a prior art needle array as set forth in the preamble of claim 1.

CN 112 077 930 A discloses a prior art cutting mechanism for cutting paper tape to an equal length and a device for punching paper tape.

DE 103 56 900 A1 discloses a prior art punching line, punching method and a coating method for the punching line.

US 8 448 310 B2 discloses a prior art circular needling table for needling a textile structure made from an annular fiber preform.

GB 2 606 342 A discloses a prior art fibre reinforces gas turbine engine component and a ceramic matrix component where fibers are deflected around an aperture.

US 8 216 641 B2 discloses a prior art method of fabricating carbon fiber reinforced composite material parts.

### SUMMARY

From one aspect, there is provided a needle array suitable for perforating a fibrous preform as recited in claim 1.

Features of embodiments are set forth in the dependent claims.

### BRIEF DESCRIPTION OF THE DRAWINGS

FIG. 1 is a simplified cross-sectional view of a needle array for creating z-channels in a fibrous preform.
FIG. 2 is a simplified cross-sectional view of the needle array of FIG. 1 inserted in a fibrous preform.
FIG. 3 is a simplified cross-sectional view of the fibrous preform after removal of the needle array.
FIG. 4 is a simplified cross-sectional view of an alternative needle array for use with tooling-mounted fibrous preforms.

The figures may not be drawn to scale, and applications and embodiments of the present invention may include features and components not specifically shown in the drawings.

### DETAILED DESCRIPTION

This disclosure presents a means for forming z-channels in a fibrous preform with reduced risk of contamination and/or surface deformation. More specifically, polymer sheaths can be formed over needles used to perforate preforms. Any polymer contaminants left in the preform are more easily removed than metallics. Further, the polymer sheaths can protect the underlying needles to extend useful life.

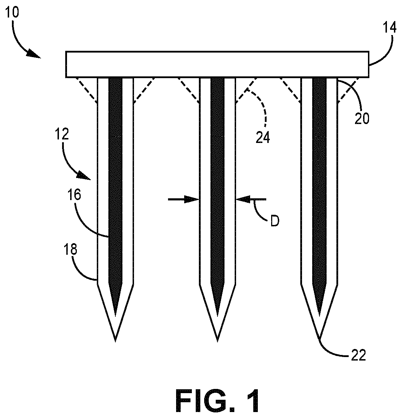

FIG. 1 is a simplified cross-sectional illustration of needle array 10. Needle array 10 includes a plurality of needles 12 extending away from backplate 14. Needles 12 can be arranged in columns and rows, or other patterns. Needles 12 are removably connected (e.g., via threaded engagement, mounting pins, etc.) to backplate 14. Each needle 12 can include metallic body 16 and polymer sheath (or coating) 18. Backplate 14 can be formed from a metallic material. As shown, each needle 12 has a relatively short taper and is generally cylindrical along most of its length between base 20 and tip 22. Medium to long tapers are also contemplated herein. Needle geometry is defined by the underlying metallic bodies 16. Polymer sheaths 18 can be formed from polyvinyl alcohol (PVA), polyvinyl butyral (PVB), or another suitable low-char polymer. Polymer sheaths 18 can be formed on metallic bodies by a spraying or melt-dipping process. As such, polymer sheaths 18 can be reapplied throughout the lifecycle of a given needle 12 or needle array 10, as repeated use causes wear to polymer sheaths 18 and underlying metallic bodies 16. Each needle 12 can have a diameter D ranging from 100 to 1,000 micrometers, with all needles of a given needle array 10 having generally uniform diameters with respect to one another. Each polymer sheath 18 can be applied such that it only nominally increases the diameter of a respective needle 12, having a uniform thickness of about 0.05 to 127 micrometers, 0.05 to 50.8 micrometers, or 0.05 to 0.1 micrometers. Each polymer sheath 18 should be applied and/or maintained to cover a respective metallic body 16 substantially if not completely.

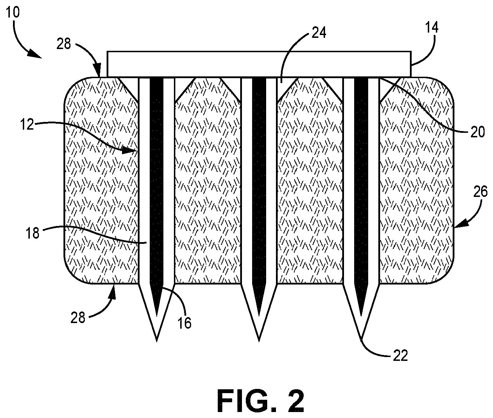

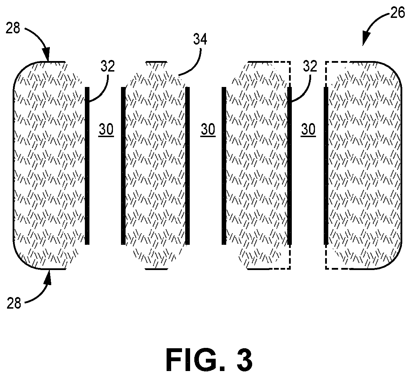

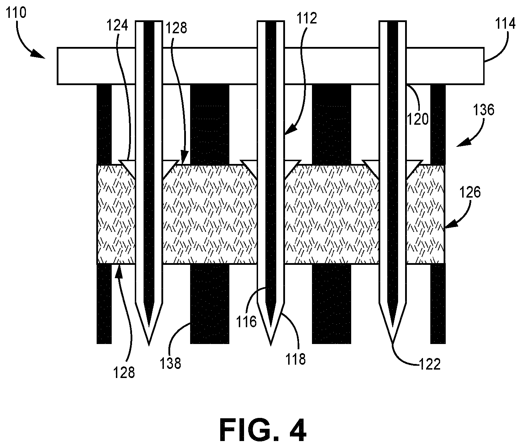

Needle array 10 further includes a collar 24 (shown with dashed lines in FIG. 1) around each needle 12. Each collar 24 has a frustoconical geometry tapering from a widest diameter proximate backplate 14 to a narrowest diameter as it reaches the exterior of needle 12 formed by polymer sheath 18. For assembly of needle array 10, collars can be inserted over needles 12, or attached to backplate 14 prior to the attachment of needles 12. Collars 24 need not be positioned against/in contact with backplate 14 but can be offset from backplate 14 (as shown in FIG. 4). Collars 24 can be similarly formed from a polymer-coated metallic material. Exemplary polymers can include PVA or PVB. In an alternative embodiment, collars 24 can be formed from a hardened plastic. Collars 24 can be used to compress the preform surface (labeled in FIGS. 2 and 3) during insertion of needles to minimize frays at the preform surface from localized preform springback.

FIG. 2 is a simplified cross-sectional illustration of needle array 10 inserted into preform 26. Preform 26 can be formed from ceramic (e.g., silicon carbide - SiC) tows arranged in one of various two or three-dimensional woven architectures such as plain, harness (e.g., 3, 5, 8, etc.), twill, braid, or non-symmetric to name a few non-limiting examples. Non-woven architectures (e.g., chopped, felted, etc.) are also contemplated herein. As shown, needles 12 extend completely through the thickness of preform 26, that is between opposing (i.e., inner and outer) surfaces 28. Although collars 24 are shown inserted into preform 26 such that plate 14 is near or flush with surface 28, collars 24, if included on needle array 10, need not be inserted to such extent. Prior to the insertion of needles 12, preform 26 can be in a dry but sized/re-sized state, or wetted with a liquid polymer tackifier. Needles 12 can be inserted through preform 26 at either surface 28, or sequentially through both surfaces 28.

FIG. 3 is a simplified cross-sectional illustration of preform 26 of FIG. 2 after the removal of needle array 10, which may have been inserted through each surface 28 of preform 26. As can be seen in FIG. 3, needles 12 form z-channels 30 extending through the thickness of preform 26. Contaminants 32 can variously be left behind in preform 26 as a result of the contact between polymer sheaths 18 and the ceramic tows of preform 26. Contaminants 32 are pieces (e.g., flakes, particles, etc.) of polymer sheaths 18 and are therefore the same material as polymer sheaths 18. Contaminants 32 can be thermally decomposed, in one example, during subsequent processing of preform 26 in which preform 26 is exposed to high temperatures. Such processing can include using CVI to form an interface coating (IFC) and/or CVI to form the ceramic (e.g., SiC) matrix.

Preform 26 can include angled segments 34 extending away from z-channels 30, which can result from pushing collars 24 into a respective surface 28 of preform 26. Z-channels 30 are otherwise cylindrical, corresponding to needle 12 geometry. If collars 24 are not included on needle array 10, or if needles 12 are inserted such that collars 24 do not make significant contact with preform 26, angled segments 34 may not be formed, and z-channels 30 can be entirely cylindrical, as is represented in dashed lines in the right-most z-channel 30 in FIG. 3.

FIG. 4 is a simplified cross-sectional illustration of an alternative needle array 110, which is arranged to complement tooling fixture 136. Tooling fixture 136 can be a graphite tooling fixture used for supporting preform 126 during CVI and other processing steps. Needle array 110 is substantially similar to needle array 10 of FIGS. 1 and 2, having needles 112 removably mounted to and extending from backplate 114. Each needle 112 includes metallic body 116 with outer polymer sheath 118. Metallic bodies 116 and polymer sheaths 118 can be made from the same materials as metallic bodies 16 and polymer sheaths 18, respectively, and similarly formed. Needles 112 have a relatively short taper and are generally cylindrical between base 120 and tip 122.

Needle array 110 differs slightly in that needles 112 must be inserted through infiltration holes 138 of tooling fixture 136, in which preform 126 is mounted, in order to reach preform 126. Accordingly, needles 112 can be arranged on backplate 114 to correspond/align with infiltration holes 138. Backplate 114 delimits the extent to which needles 112 can be inserted into preform 126, as collars 124 and needles 112 have smaller respective diameters than infiltration holes 138. Collars 124 are therefor mounted around needles 112 in a position offset from backplate 114. The z-channels formed by needle array 110 otherwise will be substantially similar to those shown in and discussed with respect to FIG. 3, extending through the entire thickness of preform 126 between opposing surfaces 128. Although shown in isolation from a tooling fixture in FIGS. 1 and 2, needle array 10 can also be used with a tooling fixture.

A CMC component formed with the disclosed perforating means can be incorporated into aerospace, maritime, or industrial equipment, to name a few, non-limiting examples.

## Claims

1. A needle array (10; 110) suitable for perforating a fibrous preform (26; 126), the needle array (10; 110) comprising:
a backplate (14; 114);
a plurality of needles (12; 112) removably attached to and extending away from the backplate (14; 114), each of the plurality of needles (12; 112) comprising:
a metallic body (16; 116); and
a polymer sheath (18; 118) covering the metallic body (16; 116),
**characterised in that**
the needle array (10; 110) comprises a collar (24; 124) disposed around each of the plurality of needles (12; 112); and
the collar (24; 124) has a frustoconical geometry tapering from widest proximate the backplate (14; 114) to narrowest distal from the backplate (14; 114).

2. The needle array (10; 110) of claim 1, wherein the collar (24; 124) is formed from a polymer material.

3. The needle array (10) of claim 1 or 2, wherein the collar (24) abuts the backplate (14).

4. The needle array of any preceding claim, wherein the polymer sheath (18; 118) comprises one of polyvinyl alcohol and polyvinyl butyral.

5. The needle array of any preceding claim, wherein each of the plurality of needles (12; 112) has a diameter (D) ranging from 100 to 1,000 micrometers

6. The needle array of any preceding claim, wherein a thickness of the polymer sheath (18; 118) ranges from 0.05 to 127 micrometers

## Patentansprüche

1. Eine Nadelanordnung (10; 110), die zum Perforieren einer Faservorform (26; 126) geeignet ist, wobei die Nadelanordnung (10; 110) umfasst:
eine Grundplatte (14; 114);
eine Vielzahl von Nadeln (12; 112), die lösbar an der Grundplatte (14; 114) angebracht sind und von dieser weg verlaufen, wobei jede der Vielzahl von Nadeln (12; 112) umfasst:
einen metallischen Körper (16; 116); und
eine Polymerumhüllung (18; 118), die den metallischen Körper (16; 116) bedeckt, **dadurch gekennzeichnet, dass**
die Nadelanordnung (10; 110) einen Kragen (24; 124) umfasst, der um jede der Vielzahl von Nadeln (12; 112) angeordnet ist; und
der Kragen (24; 124) eine kegelstumpfförmige Geometrie aufweist, die sich von der breitesten Stelle nahe der Grundplatte (14; 114) bis zur schmalsten Stelle entfernt von der Grundplatte (14; 114) verjüngt.

2. Die Nadelanordnung (10; 110) nach Anspruch 1, wobei der Kragen (24; 124) aus einem Polymermaterial gebildet ist.

3. Die Nadelanordnung (10) nach Anspruch 1 oder 2, wobei der Kragen (24) an der Grundplatte (14) anliegt.

4. Die Nadelanordnung nach einem der vorhergehenden Ansprüche, wobei die Polymerumhüllung (18; 118) eines von Polyvinylalkohol und Polyvinylbutyral umfasst.

5. Die Nadelanordnung nach einem der vorhergehenden Ansprüche, wobei jede der Vielzahl von Nadeln (12; 112) einen Durchmesser (D) im Bereich von 100 bis 1.000 Mikrometern aufweist.

6. Die Nadelanordnung nach einem der vorhergehenden Ansprüche, wobei eine Dicke der Polymerumhüllung (18; 118) im Bereich von 0,05 bis 127 Mikrometern liegt.

## Revendications

1. Réseau d'aiguilles (10 ; 110) approprié pour perforer une préforme fibreuse (26 ; 126), le réseau d'aiguilles (10 ; 110) comprenant :
une plaque arrière (14 ; 114) ;
une pluralité d'aiguilles (12 ; 112) fixées de manière amovible à la plaque arrière (14 ; 114) et s'étendant à l'écart de celle-ci, chacune de la pluralité d'aiguilles (12 ; 112) comprenant :
un corps métallique (16 ; 116) ; et
une gaine polymère (18 ; 118) recouvrant le corps métallique (16 ; 116),
**caractérisé en ce que**
le réseau d'aiguilles (10 ; 110) comprend une collerette (24 ; 124) disposée autour de chacune de la pluralité d'aiguilles (12 ; 112) ; et
la collerette (24 ; 124) présente une géométrie tronconique se rétrécissant depuis sa partie la plus large au voisinage de la plaque arrière (14 ; 114) jusqu'à sa partie la plus étroite à distance de la plaque arrière (14 ; 114).

2. Réseau d'aiguilles (10 ; 110) selon la revendication 1, dans lequel la collerette (24 ; 124) est formée d'un matériau polymère.

3. Réseau d'aiguilles (10) selon la revendication 1 ou 2, dans lequel la collerette (24) est en butée contre la plaque arrière (14).

4. Réseau d'aiguilles selon l'une quelconque des revendications précédentes, dans lequel la gaine polymère (18 ; 118) comprend l'un parmi l'alcool polyvinylique et le polyvinylbutyral.

5. Réseau d'aiguilles selon l'une quelconque des revendications précédentes, dans lequel chacune de la pluralité d'aiguilles (12 ; 112) présente un diamètre (D) allant de 100 à 1 000 micromètres.

6. Réseau d'aiguilles selon l'une quelconque des revendications précédentes, dans lequel une épaisseur de la gaine polymère (18 ; 118) va de 0,05 à 127 micromètres.
